# EUROPÄISCHE PATENTSCHRIFT

(11) **EP 2 772 295 B1**
(45) Veröffentlichungstag und Bekanntmachung des Hinweises auf die Patenterteilung: **27.12.2017**
(21) Anmeldenummer: 14000364.1
(22) Anmeldetag: 31.01.2014
(51) Int. Cl.: B01D 46/00, B01D 29/96

(54) **Hilfsvorrichtung für den Austausch von zumindest teilweise verschmutzten Fluid-Filterelementen**
Auxiliary device for the replacement of at least partially contaminated fluid filter elements
Dispositif auxiliaire pour le remplacement d'éléments de filtre pour fluide au moins partiellement encrassés

(30) Priorität: 28.02.2013 DE 102013003450
(43) Veröffentlichungstag der Anmeldung: 03.09.2014
(73) Patentinhaber: HYDAC FILTERTECHNIK GMBH, 66280 Sulzbach/Saar (DE)
(72) Erfinder: Schappert, Gerd, 57520 Grosbliederstroff (DE)
(74) Vertreter: Bartels & Partner

(56) Entgegenhaltungen:
- DE-A- 2 600 338
- DE-A1- 2 401 694
- US-A- 4 013 105
- US-A- 4 203 537
- US-A- 5 623 755
- US-A- 5 857 503
- US-A1- 2004 055 827

## Beschreibung

Die Erfindung betrifft eine Hilfsvorrichtung für den Austausch von zumindest teilweise verschmutzten Fluid-Filterelementen mit den Merkmalen im Oberbegriff von Anspruch 1.

Die Handhabung benutzter, aus betreffenden Filtergehäusen herausgenommener Filterelemente gestaltet sich wegen der Gefahr, dass der Umgebungsbereich der betreffenden Filtereinrichtungen durch von dem entnommenen Filterelement abfallende oder abtropfende Substanzen verschmutzt wird, umständlich und zeitraubend. Dies gilt insbesondere, wenn die betreffenden Filterelemente mit Fluiden betrieben werden, die für die Umwelt gefährdend oder schädigend sind, wie dies namentlich bei Hydraulikölen, Schmierölen, Kraftstoffen od. dgl. der Fall ist. Austauschvorgänge bei Filterelementen, die mit derartigen Fluiden belastet sind, müssen daher mit besonderer Sorgfalt ausgeführt werden, sowohl was den eigentlichen Austauschvorgang, als auch die anschließende Entsorgung betrifft. Eine bei Austauschvorgängen verursachte Verschmutzung des Umgebungsbereichs der betreffenden Filtereinrichtung ist besonders kritisch, wenn sich die Filtereinrichtung an Betriebsstellen befindet, die für eventuell erforderliche Reinigungsarbeiten schwer zugänglich sind. Dies gilt beispielsweise in besonderem Maße für Filtereinrichtungen, die sich im Maschinenhaus von Windkraftanlagen befinden.

Die US 4 013 105 beschreibt eine Hilfsvorrichtung für den Austausch von zumindest teilweise verschmutzten Fluid-Filterelementen, die jeweils aus einer Entnahmeöffnung eines Filtergehäuses herausnehmbar und gegen ein neues Filterelement tauschbar sind, mit einem Aufsatzteil, das an dieser Entnahmeöffnung anbringbar ist und ein Auffangteil aufweist, das beim Herausbewegen des Filterelements aus der Entnahmeöffnung sich ablösende, insbesondere abtropfende, Substanzen aufnimmt, wobei das Aufsatzteil die Form eines Rohrstücks besitzt, das auf das die Entnahmeöffnung umgebende Ende des Filtergehäuses aufsteckbar ist, und dass das Auffangteil ein den freien Endrand des Rohrstücks zumindest teilweise umgebendes Schalenteil oder Plattenteil aufweist, wobei der Endrand des Rohrstücks über den Boden des Schalenteils nach oben übersteht.

Weitere Hilfsvorrichtungen gehen aus der DE 26 00 338 A1, der US 2004/ 0055827 A1, der US 5 857 503, der US 5 623 755 und der US 4 203 537 hervor.

Im Hinblick auf diese Problematik liegt der Erfindung die Aufgabe zugrunde, eine Hilfsvorrichtung zur Verfügung zu stellen, die einen besonders einfachen und sicheren Austausch von Filterelementen ermöglicht.

Erfindungsgemäß ist diese Aufgabe durch eine Hilfsvorrichtung gelöst, die die Merkmale des Patentanspruchs 1 in seiner Gesamtheit aufweist.

Demgemäß besteht eine wesentliche Besonderheit der Erfindung darin, dass in der Wand des überstehenden Teils des Rohrstücks mindestens eine Öffnung vorgesehen ist, an der ein Sieb angeordnet ist.

Dadurch ist ein Rückfluss in das Filtergehäuse ermöglicht, durch das Sieb werden jedoch Verschmutzungen zurückgehalten. Im Schalenteil selbst verbleibt daher ein geringerer Anteil an zu entsorgenden Substanzen.

Es ist ferner vorgesehen, dass die Hilfsvorrichtung ein Aufsatzteil aufweist, das an der Entnahmeöffnung des betreffenden Filtergehäuses anbringbar ist und ein Auffangteil aufweist, das beim Herausbewegen des Filterelements aus der Entnahmeöffnung sich ablösende, insbesondere abtropfende, Substanzen aufnimmt. Ohne dass weitere Maßnahmen zu treffen sind, kann nach Anbringen der Hilfsvorrichtung, d.h. des Aufsetzens des Aufsatzteils, das gebrauchte Filterelement ohne weiteres aus der Entnahmeöffnung herausgenommen werden, ohne dass eine Gefahr besteht, dass das Filtergehäuse selbst und/oder der Boden der betreffenden Betriebsstelle durch ablaufende oder sich ablösende Substanzen verschmutzt würde, weil solche Substanzen in dem Auffangteil sicher verbleiben.

Das Aufsatzteil besitzt die Form eines Rohrstückes, das auf das die Entnahmeöffnung umgebende Ende des Filtergehäuses aufsteckbar ist, wobei das Auffangteil ein den freien Endrand des Rohrstücks zumindest teilweise umgebendes Schalenteil oder Plattenteil aufweist. Dadurch kann das Schalenteil selbst den Aufnahmebehälter für die abtropfenden oder abfallenden Substanzen bilden. Jedoch kann im Auffangteil, insbesondere Schalenteil auch eine Einlage aus einem saugfähigen Material vorgesehen sein, etwa in Form einer Granulateinlage, einem saugfähigen Verpackungsmaterial oder einem Material, wie es bei Windeln benutzt wird. Auch kann der Werkstoff des Auffangteils selbst aus einem saugfähigen Material, beispielsweise einer geeigneten Pappe, gebildet sein.

Insoweit könnte das Auffangteil anstelle einer Schale aus einer ebenen Auffangplatte, insbesondere mit dem saugfähigen Material ausgestattet oder aus diesem zumindest teilweise bestehend, gebildet sein. Möglich ist auch eine zumindest teilweise eingebrachte Sieb-, Gitter- oder Netzstruktur in das Auffangteil, das dann mit einem abnehmbaren zusätzlichen Auffangkörper, wie einem darunter liegenden Tank- oder Vorratsbehälter auch in Tütenform in koppelbarer Weise ausgestaltet ist.

Die Anordnung ist so getroffen, dass der Endrand des Rohrstücks über den Boden des Schalenteils nach oben übersteht. Wenn im Schalenteil keine saugfähige Einlage vorgesehen ist und sich dadurch flüssige Substanzen auf dem Boden des Schalenteils ansammeln, ist durch den Überstand des Endrandes verhindert, dass Schmutzsubstanzen in das Filtergehäuse zurückfließen.

Bei besonders vorteilhaften Ausführungsbeispielen besitzt das Schalenteil eine sich vom Rohrstück seitlich erstreckende Erweiterung.

Eine derartige Bauform des Schalenteils eröffnet die Möglichkeit, die seitliche Erweiterung als eine Bodenfläche zu nutzen, auf der ein aus der Entnahmeöffnung herausgenommenes Filterelement absetzbar ist. Vor der

Entsorgung des Filterelements kann man dieses daher auf sichere Weise abtropfen lassen, wodurch sich der anschließende Entsorgungsvorgang einfacher und gefahrloser gestaltet.

Bei eine seitliche Erweiterung aufweisenden Schalenteilen kann in vorteilhafter Weise alternativ auch an der Bodenfläche ein Durchgang gebildet sein, durch den hindurch ein aus dem Filtergehäuse entnommenes Filterelement in ein Entsorgungsbehältnis, bewegbar ist. Dadurch ist, vom Herausnehmen aus dem Filtergehäuse bis zur sicheren Entsorgung, kein ungeschützter Transportvorgang für das betreffende Filterelement erforderlich. In besonders vorteilhafter Weise kann die Anordnung so getroffen sein, dass ein den Durchgang des Schalenteils umgebender, nach unten vorstehender Stutzen vorgesehen ist, an dessen Außenseite die Öffnung eines Entsorgungsbeutels anbringbar ist. Die Hilfsvorrichtung bildet dadurch gleichzeitig eine Eingabehilfe für den Verpackungsvorgang des zu entsorgenden Filterelements.

Um bei der Herausnahme eines benutzten Filterelements aus dem Filtergehäuse die Gefahr einer Kontaktierung der Außenseite des Filterelements mit abtropfenden oder abfallenden Substanzen auszuschließen, kann an der Innenseite des das Aufsatzteil bildenden Rohrstücks ein Dichtelement zur Abdichtung gegen die Außenseite des Filtergehäuses vorgesehen sein.

Nachstehend ist die Erfindung anhand von in der Zeichnung dargestellten Ausführungsbeispielen im Einzelnen erläutert. Es zeigen:
- Fig. 1: eine perspektivische Schrägansicht eines Ausführungsbeispiels der erfindungsgemäßen Hilfsvorrichtung;
- Fig. 2: einen senkrechten Schnitt des Ausführungsbeispiels;
- Fig. 3: eine gegenüber Fig. 1 in kleinerem Maßstab gezeichnete perspektivische Schrägansicht des Ausführungsbeispiels, wobei die Entnahme eines auszutauschenden Filterelements dargestellt ist;
- Fig. 4: eine der Fig. 3 ähnliche perspektivische Schrägansicht, wobei das Absetzen eines entnommenen Filterelements auf einer Bodenfläche des Schalenteils der Hilfsvorrichtung angedeutet ist;
- Fig. 5: eine der Fig. 1 ähnliche perspektivische Schrägansicht eines zweiten Ausführungsbeispiels der Hilfsvorrichtung;
- Fig. 6: eine perspektivische Schrägansicht, in der das zweite Ausführungsbeispiel von Fig. 5 während des Vorgangs der Verpackung eines benutzten Filterelements gezeigt ist;
- Fig. 7: eine perspektivische Schrägansicht eines dritten Ausführungsbeispiels der erfindungsgemäßen Hilfsvorrichtung;
- Fig. 8: eine abgebrochen gezeichnete perspektivische Schrägansicht eines Teilbereichs des Schalenteils eines vierten Ausführungsbeispiels; und
- Fig. 9: eine perspektivische Schrägansicht, in der das vierte Ausführungsbeispiel, aufgesetzt auf einer zugeordneten Filtervorrichtung, zusammen mit einem aus dieser herausgenommenen Filterelement gezeigt ist.

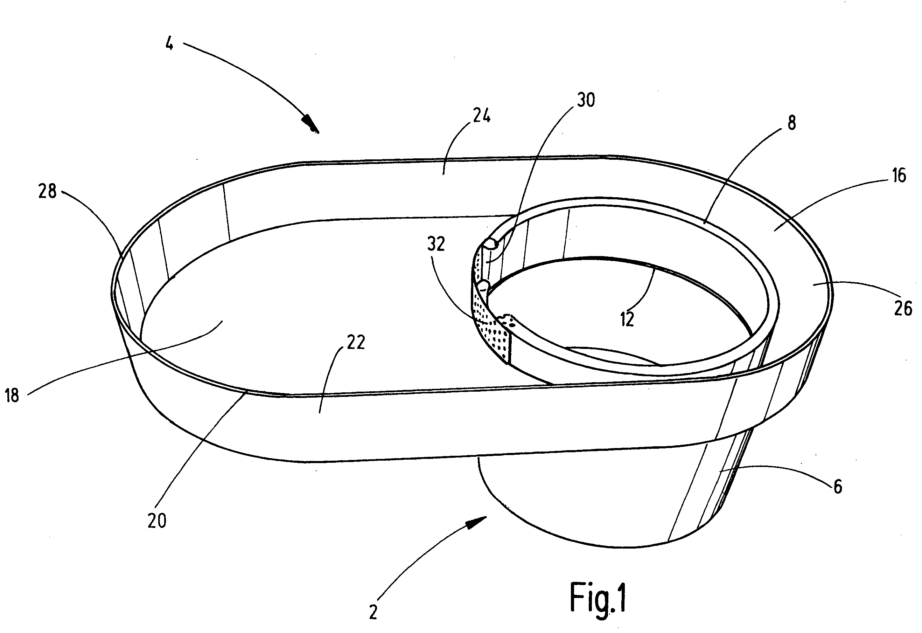

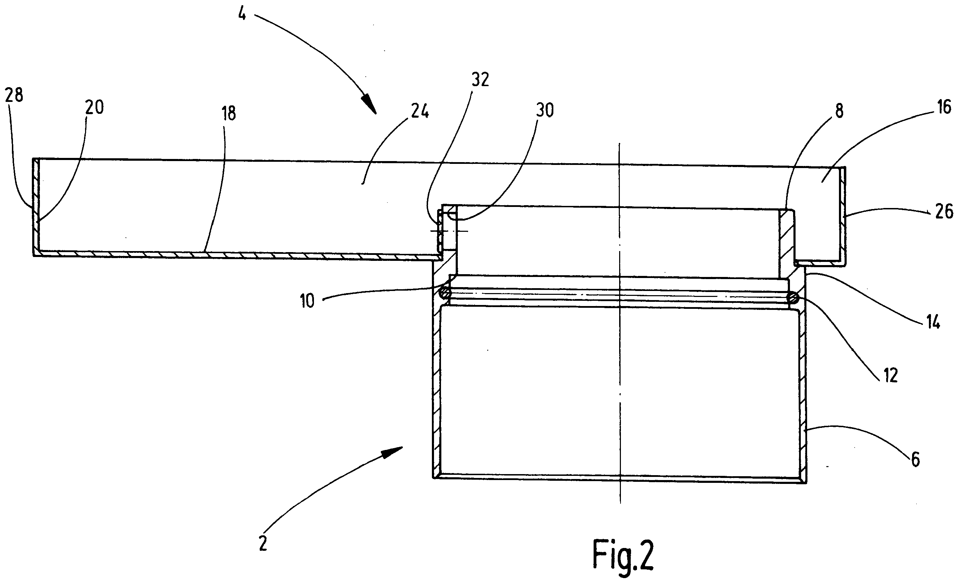

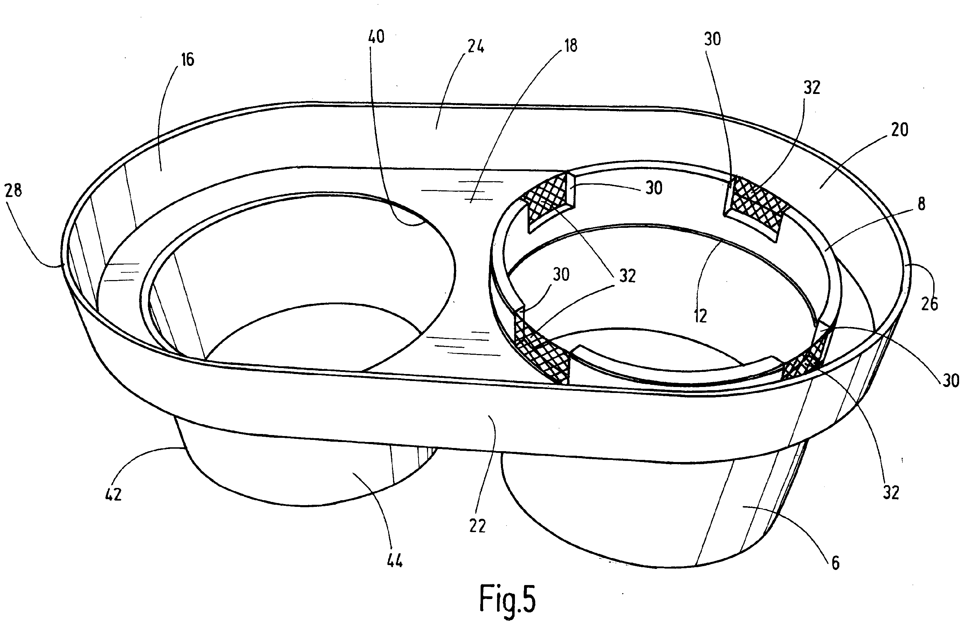

Die Hilfsvorrichtung, von der in Fig. 1 bis 4 ein erstes Ausführungsbeispiel und in Fig. 5 bis 9 weitere Ausführungsbeispiele gezeigt sind, weist zwei Hauptbestandteile auf, nämlich ein Aufsatzteil, das in Fig. 1 mit 2 bezeichnet ist, sowie ein Auffangteil, das in Fig. 1 mit 4 bezeichnet ist. Das Aufsatzteil 2 ist durch ein aus metallischem Werkstoff oder aus einem duroplastischen Kunststoff bestehendes Rohrstück 6 gebildet, das auf den oberen Rand eines üblichen Filtergehäuses aufsetzbar ist, der die Entnahmeöffnung des Filtergehäuses umgibt, durch die hindurch ein benutztes Filterelement herausnehmbar ist. Filtergehäuse und Filterelement sind in Fig. 1 nicht dargestellt. Wie der Schnittdarstellung von Fig. 2 entnehmbar ist, ist das Rohrstück 6 in der Nähe seines oberen Endrandes 8 innenseitig gestuft, so dass eine Ringfläche 10 als Anlagefläche für den Umfangsrand des Filtergehäuses gebildet ist, auf das das Rohrstück 6 aufsetzbar ist. Unterhalb der Ringfläche 10 ist in einer Ringnut ein O-Ring 12 angeordnet, der die Innenseite des aufgesetzten Rohrstücks 6 gegen die Außenseite des Filtergehäuses abdichtet. Sofern das Rohrstück 6 des Aufsatzteiles 2 aus einem elastomeren, nachgiebigen Material besteht, lässt sich dieses in einem vorgebbaren Rahmen unterschiedlicher Durchmesser auf die die jeweilige Entnahmeöffnung begrenzenden Filtergehäuseteile in dichtender und wiederlösbarer Weise "aufschnappen".

Ansonsten ist in geringem Abstand vom freien Endrand 8 an der Außenseite des Rohrstücks 6 eine Außenschulter 14 gebildet, die die Anlagefläche zur Anbringung des Auffangteils 4 am Rohrstück 6 bildet. Das Auffangteil 4 hat beim vorliegenden Beispiel die Form eines Schalenteils 16 aus einem Aluminiumwerkstoff mit einem ebenen Boden 18, der sich vom Rohrstück 6 weg zur Seite hin über eine Länge erstreckt, die zumindest dem Durchmesser des Rohrstücks 6 entspricht. Die sich vom Boden 18 senkrecht erstreckende Seitenwand 20 des Schalenteils 16 läuft an dem in Fig. 2 rechtsseitig gelegenen Ende in geringem Abstand zum Endrand 8 des Rohrstücks 6 bogenförmig und zum Endrand 8 konzentrisch und ist auch am entgegengesetzten Ende kreisbogenförmig, wobei die endseitigen Bögen 26 und 28 durch gerade Wandteile 22 und 24 miteinander verbunden sind.

Bei am Rohrstück 6 angebrachtem Schalenteil 16 durchgreift der Endrand 8 des Rohrstücks 6 in dichter Anlage eine Öffnung im Boden 18, wobei der Endrand 8 über den Boden 18 übersteht. Wenn der Endrand 8 keine Unterbrechung aufweist, bildet das Schalenteil 16 einen Auffangbehälter aus, in dem sich Substanzen, die sich beim Herausnehmen eines benutzten Filterelements ablösen oder von diesem abtropfen, ansammeln und verbleiben. Wenn auf dem Boden 18 des Schalenteils 16 ein saugfähiges Material (nicht dargestellt) angeordnet ist, können solche Substanzen aufgenommen und entsorgt werden. Alternativ ist bei den in der Zeichnung dargestellten Beispielen im Endrand 8 mindestens eine Öffnung 30 vorgesehen, durch die ein Rückfluss flüssiger Substanzen in das Filtergehäuse zurück erfolgen kann. Um sicherzustellen, dass hierbei keine Schmutzstoffe in das Filtergehäuse zurückgelangen, ist die jeweilige Öffnung 30 mit einem Sieb 32 versehen.

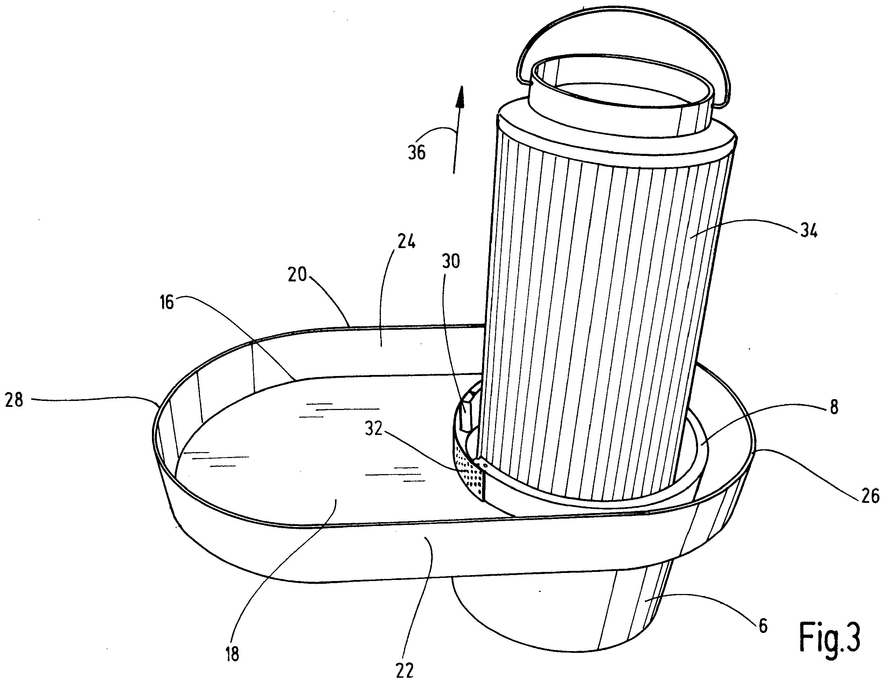

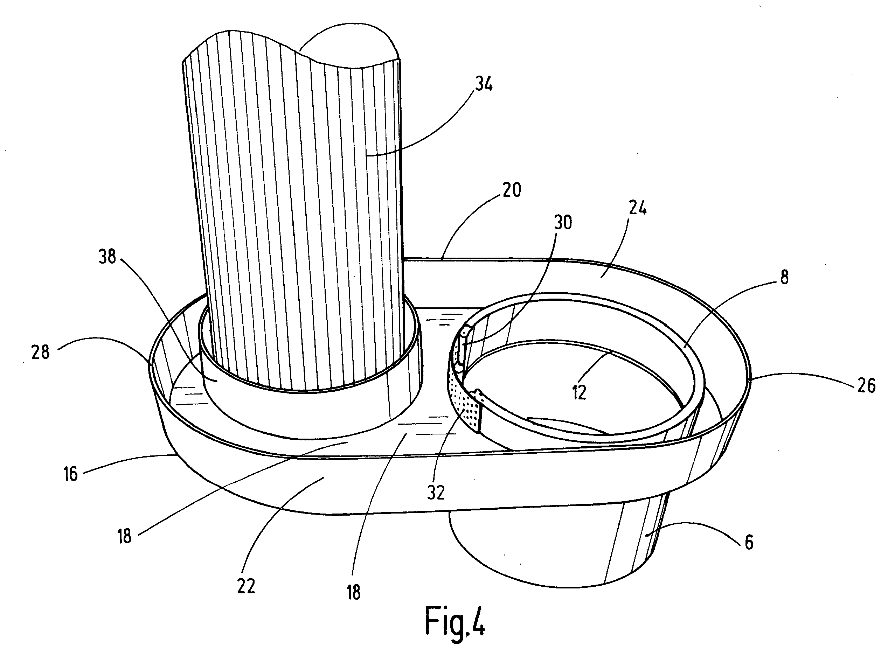

Die Fig. 3 und 4 verdeutlichen zwei Phasen beim Herausbewegen eines benutzten Filterelements 34. Nachdem das Filterelement 34, wie in Fig. 3 mit Pfeil 36 angedeutet, aus dem Filtergehäuse herausgenommen ist, kann das Filterelement 34 auf den Boden 18 in dem seitlich erweiterten Bereich des Schalenteils 16 abgesetzt werden, s. Fig. 4. Vor dem eigentlichen Entsorgungsvorgang kann das Filterelement 34 zusammen mit seinem Schmutzauffangkorb 38 auf dem Boden 18 belassen werden, so dass verbliebene Substanzen abfallen und abtropfen können. Das abgetropfte Filterelement 34 kann sodann, gegebenenfalls nach Abnehmen des Schmutzauffangkorbes 38 oder zusammen mit diesem, entsorgt werden.

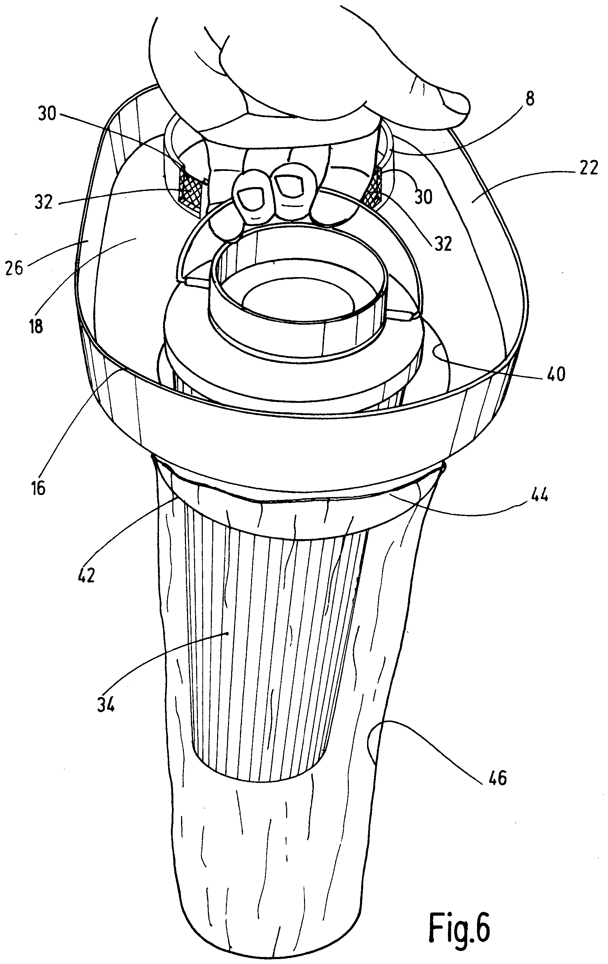

Fig. 5 und 6 zeigen ein zweites Ausführungsbeispiel. Ein Unterschied gegenüber dem ersten Beispiel besteht darin, dass im überstehenden Endrand 8 des Rohrstücks 6 mehrere Öffnungen 30, die jeweils mit einem Sieb 32 versehen sind, ausgebildet sind. Ein weiterer Unterschied besteht darin, dass der Boden 18 des Schalenteils 16 einen Durchgang 40 aufweist, dessen Durchmesser den Durchtritt eines Filterelements 34 ermöglicht. An die Unterseite des Durchgangs 40 schließt sich ein nach unten vorstehender Rohrstutzen 42 an, dessen Außenumfangsfläche 44 eine Anbringfläche für einen Entsorgungsbeutel 46 bildet. Dieser ist in der Art einer Tüte aus einem Kunststoffmaterial ausgebildet. Für das benutzte Filterelement 34, das, wie dies in Fig. 6 verdeutlicht ist, über die Öffnung 40 im Boden 18 in den Beutel 46 eingebracht wird, ist dadurch ein sicherer Einschluss des Filterelements für dessen sichere Entsorgung gebildet. Das Schalenteil 16 mit seinem im Boden 18 befindlichen Durchgang und dem Stutzen 42 bildet somit zugleich eine Verpackungshilfe für den Entsorgungsvorgang.

Während vorstehend als Werkstoff für das Schalenteil 16 ein Aluminiumwerkstoff beschrieben ist, könnte das Schalenteil 16 auch aus einem saugfähigen Wegwerfmaterial gebildet sein, das mit oder ohne eine zusätzliche Einlage aus saugfähigem Material die vom benutzten Filterelement 34 abfallenden oder abtropfenden Substanzen aufnimmt und bindet. In diesem Fall könnte das Schalenteil 16 als Wegwerfteil vom Rohrstück 6 abgenommen, zusammengefaltet und zusammen mit dem benutzten Filterelement 34 in den Entsorgungsbeutel 46 eingegeben werden.

Die an sich einstückig oder zweistückig ausgebildete Hilfsvorrichtung könnte auch in modularer Bauweise ausgestaltet sein, beispielsweise in der Art, dass das Aufsatzteil 2 aus einem wiederverwendbaren Metall- oder Kunststoffwerkstoff gebildet ist, wohingegen ein ablösbares Auffangteil 4 aus einem vorzugsweise recycelbaren, saugfähigen Material wie Pappe, Vliesstoff oder dergleichen mehr gebildet ist. Ein verschmutztes Auffangteil 4 lässt sich dann dergestalt vom Aufsatzteil 2 trennen und getrennt entsorgen, was Material und mithin Kosten einsparen hilft. Während bei den Darstellungen nach den Fig. 1 bis 5 das Auffangteil 4 als Schalenkörper ausgebildet ist, besteht auch die Möglichkeit das Auffangteil aus einer ebenen Platte (nicht dargestellt) auszubilden, die vorzugsweise mit einem saugfähigen Material versehen dem Absetzen des jeweils verschmutzten Filterelementes 34 dient. Sofern die Hilfsvorrichtung aus einem dauerhaften Material ausgebildet ist, lässt sich jedenfalls das Auffangteil 4 derart abreinigen, beispielsweise abspülen oder mit Druckluft abreinigen, dass ein Neu-Filterelement ohne von Verschmutzungen beeinträchtigt zu werden, welches auf dem Filtergehäuse aufgesetztem Aufsatzteil 2 derart einwechselbar ist, dass es jedenfalls vor dem Einsetzen in die Entnahmeöffnung noch entsprechend vorbereitet werden kann, beispielsweise optisch begutachtet werden, oder zusätzlich an seinem einem Ende mit einem Schmutzauffangkorb 38 ausgestattet werden kann. Die Hilfsvorrichtung, insbesondere wenn sie aus einem massiven Werkstoff aufgebaut ist, ist derart eigenstabil, dass bei aufgesetztem Aufsatzteil 2 jedenfalls ein auf die Bodenfläche 18 des Auffangteils 4 aufgesetztes Filterelement gehandhabt werden kann, ohne dass zusätzliche Handgriffe für das Halten der Hilfsvorrichtung notwendig wären. Aufsatzteil 2 und Auffangteil 4 sind bevorzugt mittels einer Schnapp- oder Schweißverbindung, aber auch in loser Form miteinander koppelbar.

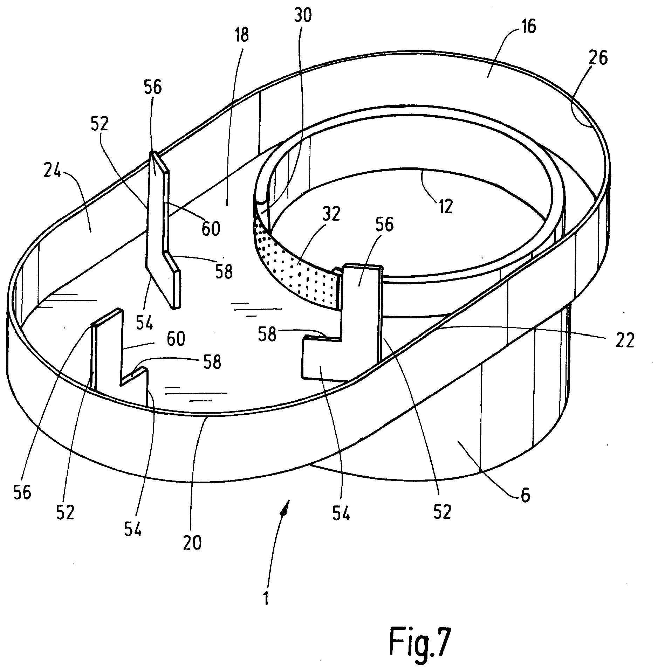

Bei einem in Fig. 7 gezeigten weiteren Ausführungsbeispiel ist auf der Bodenfläche 18 des Schalenteils 16 eine Aufnahme vorgesehen, die für ein herausgenommenes und vor der endgültigen Entsorgung abzusetzendes Filterelement 34 eine Lagesicherung bildet. Bei dem Beispiel von Fig. 7 weist die Aufnahme drei Winkelstücke 52 auf, die mit einem ein Fußteil bildenden horizontalen Schenkel 54 auf der Bodenfläche 18 befestigt sind. Jeder horizontale Schenkel 54 bildet eine horizontale Auflagefläche 58. Die sich vertikal erstreckenden Schenkel 56 der Winkelstücke 52 bilden an ihrem innenliegenden Rand 60 eine Führungsfläche, an der ein auf den Auflageflächen 58 abgestelltes Filterelement 34 seitlich geführt ist.

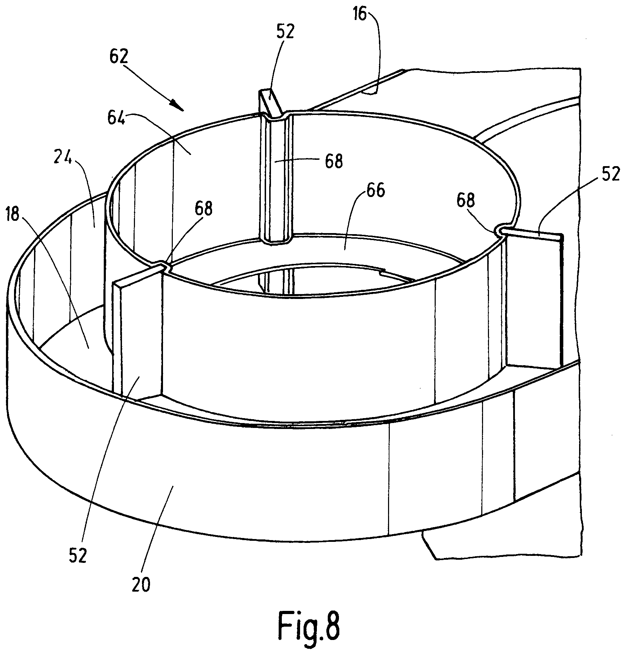

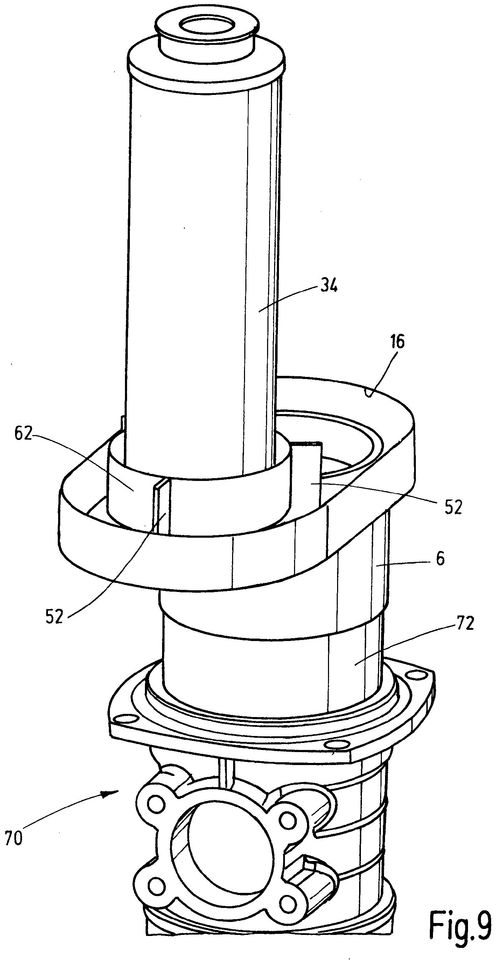

Fig. 8 und 9 zeigen ein weiteres Ausführungsbeispiel, bei dem die Aufnahme zusätzlich zu den Winkelstücken 52 eine Einfassung 62 aufweist. Die Einfassung 62 weist eine Wand 64 in Form eines Zylindermantels auf, wobei am unteren Rand der Wand 64 ein eine Radialebene bildender, nach innen vorspringender Ring 66 vorgesehen ist. Mit diesem Ring 66 liegt die Einfassung 62 auf den Auflageflächen 58 der Winkelstücke 52 auf. Zusätzlich sind in der Wand 64 Sicken 68 radial nach innen ausgebildet, in die der sich vertikal erstreckende Schenkel 56 der Winkelstücke 52 eingreift, so dass für die Einfassung 62 eine Verdrehsicherung gebildet ist. Die Fig. 9 zeigt die Hilfsvorrichtung aufgesetzt auf das Endteil 72 des betreffenden Filtergehäuses 70.

Sofern die Bodenfläche 18 teilweise durchlässig gestaltet ist, beispielsweise Sieb-, Gitter- oder Netzdurchbrechungen aufweist, die gegebenenfalls auch von einem nicht näher dargestellten saugfähigen Material abgedeckt sein können, lässt sich in Blickrichtung auf die Figuren gesehen unterhalb der Bodenfläche 18 jedenfalls ein zusätzlicher nicht näher dargestellter Auffangkörper in der Art eines Tank- oder Vorratsbehälters, auch in Tütenform, koppelbar und wieder lösbar anbringen, um dergestalt Entsorgungsvorgänge von aufgefangenen Öl- und Schmutzpartikeln durchführen zu können, ohne dass man die Hilfsvorrichtung vom Filtergehäuse abzunehmen bräuchte. Insbesondere bei Großfilterelementen, wie sie bei Windanlagen regelmäßig zum Einsatz kommen, ist die Hilfsvorrichtung bei der Handhabung der Filterelemente zwecks ihres Austauschs für den Monteur eine sehr große Hilfe und es ist für einen Durchschnittsfachmann auf dem Gebiet der Filterelemente überraschend, dass er mit geringen konstruktiven Mitteln und auch bei geringen Kosten Monteuren eine Hilfsvorrichtung an die Hand geben kann, die insbesondere im Off-Shore-Bereich, wo regelmäßig sehr schwere Arbeitsbedingungen herrschen, eine deutliche Erleichterung bringen. Die angesprochene Bodenfläche 18 kann auch unterteilt sein und beispielsweise über eben verlaufende Flächenteile verfügen zum Abstellen des Filterelementes und über geneigte Flächenanteile, die den Rücklauf des Fluids in Richtung der Entnahmeöffnung des Filtergehäuses erleichtern helfen.

## Patentansprüche

1. Hilfsvorrichtung für den Austausch von zumindest teilweise verschmutzten Fluid-Filterelementen (34), die jeweils aus einer Entnahmeöffnung eines Filtergehäuses (70) herausnehmbar und gegen ein neues Filterelement (34) tauschbar sind, mit einem Aufsatzteil (2), das an dieser Entnahmeöffnung anbringbar ist und ein Auffangteil (4) aufweist, das beim Herausbewegen des Filterelements (34) aus der Entnahmeöffnung sich ablösende, insbesondere abtropfende, Substanzen aufnimmt, wobei das Aufsatzteil (2) die Form eines Rohrstücks (6) besitzt, das auf das die Entnahmeöffnung umgebende Ende (72) des Filtergehäuses aufsteckbar ist, und dass das Auffangteil (4) ein den freien Endrand (8) des Rohrstücks (6) zumindest teilweise umgebendes Schalenteil (16) oder Plattenteil aufweist, wobei der Endrand (8) des Rohrstücks (6) über den Boden (18) des Schalenteils (16) nach oben übersteht, **dadurch gekennzeichnet, dass** in der Wand des überstehenden Teils des Rohrstücks (6) mindestens eine Öffnung (30) vorgesehen ist, an der ein Sieb (32) angeordnet ist.

2. Hilfsvorrichtung nach Anspruch 1, **dadurch gekennzeichnet, dass** das Schalenteil (16) eine sich vom Rohrstück (6) seitlich erstreckende Erweiterung besitzt.

3. Hilfsvorrichtung nach Anspruch 2, **dadurch gekennzeichnet, dass** die seitliche Erweiterung des Schalenteils eine Bodenfläche (18) für das Absetzen eines aus der Entnahmeöffnung herausgenommenen Filterelements (34) bildet.

4. Hilfsvorrichtung nach Anspruch 3, **dadurch gekennzeichnet, dass** an der Bodenfläche (18) des Schalenteils (16) ein Durchgang (40) gebildet ist, durch den hindurch ein aus dem Filtergehäuse entnommenes Filterelement (34) in ein Entsorgungsbehältnis (46) bewegbar ist.

5. Hilfsvorrichtung nach Anspruch 4, **dadurch gekennzeichnet, dass** ein den Durchgang (40) des Schalenteils (16) umgebender, nach unten vorstehender Stutzen (42) vorgesehen ist, an dessen Außenseite die Öffnung eines Entsorgungsbeutels (46) anbringbar ist.

6. Hilfsvorrichtung nach einem der Ansprüche 3 bis 5, **dadurch gekennzeichnet, dass** an der Bodenfläche (18) des Schalenteils (16) eine Aufnahme (52, 62) zur Lagesicherung eines aus der Entnahmeöffnung herausgenommenen, auf der Bodenfläche (18) abgesetzten Filterelements (34) vorgesehen ist.

7. Hilfsvorrichtung nach einem der vorstehenden Ansprüche, **dadurch gekennzeichnet, dass** an der Innenseite des das Aufsatzteil (2) bildenden Rohrstücks (6) ein Dichtelement (12) zur Abdichtung gegen die Außenseite des Filtergehäuses (70, 72) vorgesehen ist.

## Claims

1. An auxiliary device for the replacement of at least partially contaminated fluid filter elements (34) which can respectively be removed from a discharge opening of a filter housing (70) and be replaced with a new filter element (34), comprising an attachment portion (2), which can be attached at this discharge opening, and a receiving portion (4) which, upon moving the filter element (34) out of the discharge opening, receives substances that become detached, in particular drip off, the attachment portion (2) being in the form of a tube component (6) which can be placed on the end (72) of the filter housing surrounding the discharge opening, and that the receiving portion (4) has a bowl portion (16) or plate portion at least partially surrounding the free end edge (8) of the tube component (6), the end edge (8) of the tube component (6) projecting upwardly over the bottom (18) of the bowl portion (16), **characterised in that** there is at least one opening (30) in the wall of the projecting portion of the tube component (6), at which opening a filter (32) is disposed.

2. The auxiliary device according to Claim 1, **characterised in that** the bowl portion (16) has an extension extending laterally from the tube component (6).

3. The auxiliary device according to Claim 2, **characterised in that** the lateral extension of the bowl portion forms a bottom surface (18) for the setting down of a filter element (34) removed from the discharge opening.

4. The auxiliary device according to Claim 3, **characterised in that** there is formed on the bottom surface (18) of the bowl portion (16) a passage (40) through which a filter element (34) removed from the filter housing can be moved into a disposal container (46).

5. The auxiliary device according to Claim 4, **characterised in that** a downwardly projecting nozzle (42) that surrounds the passage (40) of the bowl portion (16) is provided, on the outside of which the opening of a disposal bag (46) can be attached.

6. The auxiliary device according to any of Claims 3 to 5, **characterised in that** a receiver (52, 62) for the positional securing of a filter element (34) removed from the discharge opening and set down on the bottom surface (18) is provided on the bottom surface (18) of the bowl portion (16).

7. The auxiliary device according to any of the preceding claims, **characterised in that** a sealing element (12) for sealing with respect to the outside of the filter housing (70, 72) is provided on the inside of the tube component (6) forming the attachment portion (2).

## Revendications

1. Dispositif auxiliaire pour le remplacement d'éléments (34) filtrants de fluide, encrassés au moins en partie, qui peuvent être retirés d'une ouverture de prélèvement d'une enveloppe (70) de filtre et être remplacés par un élément (34) filtrant nouveau, comprenant une partie (2) de coiffe, qui peut être mise sur cette ouverture de prélèvement et qui a une partie (4) de réception, qui, lorsque l'élément (34) filtrant est retiré de l'ouverture de prélèvement, reçoit des substances, qui se détachent, notamment qui s'égouttent, la partie (2) de coiffe ayant la forme d'une pièce (6) tubulaire, qui peut être enfilée sur l'extrémité (72), entourant l'ouverture de prélèvement, de l'enveloppe du filtre, et en ce que la partie (4) de réception a une partie (16) en coque ou un partie en plaque entourant au moins en partie le bord (8) d'extrémité libre de la pièce (6) tubulaire, le bord (8) d'extrémité de la pièce (6) tubulaire dépassant vers le haut du fond (18) de la partie (16) en coque, **caractérisé en ce que**, dans la paroi de la partie en dépassement de la pièce (6) tubulaire, est prévue au moins une ouverture (30) sur laquelle est mis un tamis (32).

2. Dispositif auxiliaire suivant la revendication 1, **caractérisé en ce que** la partie (16) en coque a un élargissement s'étendant latéralement de la pièce (6) tubulaire.

3. Dispositif auxiliaire suivant la revendication 2, **caractérisé en ce que** l'élargissement latérale de la partie en coque forme une surface (18) de fond pour le dépôt d'un élément (34) filtrant retiré de l'ouverture de prélèvement.

4. Dispositif auxiliaire suivant la revendication 3, **caractérisé en ce qu'**il est formé, sur la surface (18) de fond de la partie (16) en coque, un passage (40) par lequel un élément (34) filtrant, retiré de l'enveloppe du filtre, peut être mis dans un récipient (46) de dépollution.

5. Dispositif auxiliaire suivant la revendication 4, **caractérisé en ce qu'**il est prévu une tubulure (42), qui entoure le passage (40) de la partie (16) en coque, qui fait saillie vers le bas et sur le côté extérieur duquel peut être mise l'ouverture d'un sac (46) de dépollution.

6. Dispositif auxiliaire suivant l'une des revendications 3 à 5, **caractérisé en ce qu'**il est prévu, sur la surface (18) de fond de la partie (16) en coque, un logement (52, 62) pour assurer la position d'un élément (34) filtrant, retiré de l'ouverture de prélèvement et déposé sur la surface (18) du fond.

7. Dispositif auxiliaire suivant l'une des revendications précédentes, **caractérisé en ce qu'**il est prévu, sur la face intérieure de la pièce (6) tubulaire formant la partie (2) de coiffe, un élément (12) d'étanchéité pour assurer l'étanchéité vis-à-vis de la face extérieure de l'enveloppe (70, 72) du filtre.
